(19) Europäisches Patentamt / European Patent Office / Office européen des brevets

(11) **EP 3 371 125 B1**

(12) **EUROPEAN PATENT SPECIFICATION**

(45) Date of publication and mention of the grant of the patent:
**18.10.2023 Bulletin 2023/42**

(21) Application number: **16801599.8**

(22) Date of filing: **28.09.2016**

(51) International Patent Classification (IPC):
**C04B 28/00** $^{(2006.01)}$

(52) Cooperative Patent Classification (CPC):
(C-Sets available)
**C04B 28/006; C04B 28/008;** C04B 2201/20;
C04B 2201/30; Y02P 40/10; Y02W 30/91    (Cont.)

(86) International application number:
**PCT/IT2016/000223**

(87) International publication number:
**WO 2017/056122 (06.04.2017 Gazette 2017/14)**

(54) **PROCESS FOR PRODUCING A BUILDING MATERIAL OBTAINED FROM AN ALKALINE ACTIVATION OF SAWING SLUDGE OF STONE MATERIALS**

VERFAHREN ZUR HERSTELLUNG EINES BAUMATERIALS AUS EINER ALKALISCHEN AKTIVIERUNG VON SÄGESCHLAMM AUS STEINMATERIALIEN

PROCÉDÉ DE PRODUCTION D'UN MATÉRIAU DE CONSTRUCTION OBTENU À PARTIR D'UNE ACTIVATION ALCALINE DE BOUES DE SCIAGE DE MATÉRIAUX EN PIERRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2015 IT UB20154006**

(43) Date of publication of application:
**12.09.2018 Bulletin 2018/37**

(73) Proprietors:
• **Politecnico Di Torino**
  **10129 Torino (IT)**
• **Centro Servizi Lapideo**
  **28865 Crevoladossola (VB) (IT)**
• **Consorzio INSTM**
  **50121 Firenze (IT)**
• **Cerutti, Marco**
  **28823 Ghiffa (VB) (IT)**

(72) Inventors:
• **CERUTTI, Marco**
  **I-28823 Ghiffa (VB) (IT)**
• **PALMERO, Paola**
  **I-10129 Torino (IT)**
• **ZERBINATTI, Marco**
  **I-10129 Torino (IT)**
• **TULLIANI, Jean-Marc**
  **I-10129 Torino (IT)**
• **ANTONACI, Paola**
  **I-10129 Torino (IT)**
• **FORMIA, Alessandra**
  **I-50121 Firenze (IT)**
• **MARIAN, Massimo**
  **I-28865 Crevoladossola (VB) (IT)**

(74) Representative: **Garavelli, Paolo**
**A.BRE.MAR. S.R.L.**
**Consulenza in Proprietà Industriale**
**Via Servais 27**
**10146 Torino (IT)**

(56) References cited:
• **PAOLA PALMERO ET AL: "Geopolymer technology for application-oriented dense and lightened materials. Elaboration and characterization", CERAMICS INTERNATIONAL., vol. 41, no. 10, 8 July 2015 (2015-07-08), pages 12967-12979, XP055273149, NL ISSN: 0272-8842, DOI: 10.1016/j.ceramint.2015.06.140**

EP 3 371 125 B1

- **HAIRI SITI NOOR ET AL: "Synthesis and properties of inorganic polymers (geopolymers) derived from Bayer process residue (red mud) and bauxite", JOURNAL OF MATERIALS SCIENCE, KLUWER ACADEMIC PUBLISHERS, DORDRECHT, vol. 50, no. 23, 14 August 2015 (2015-08-14), pages 7713-7724, XP035547988, ISSN: 0022-2461, DOI: 10.1007/S10853-015-9338-9 [retrieved on 2015-08-14]**
- **LIANYANG ZHANG ET AL: "Synthesis and characterization of fly ash modified mine tailings-based geopolymers", CONSTRUCTION AND BUILDING MATERIALS, vol. 25, no. 9, 1 September 2011 (2011-09-01), pages 3773-3781, XP055273323, Netherlands ISSN: 0950-0618, DOI: 10.1016/j.conbuildmat.2011.04.005**
- **SUKSIRIPATTANAPONG CHERDSAK ET AL: "Compressive strength development in fly ash geopolymer masonry units manufactured from water treatment sludge", CONSTRUCTION AND BUILDING MATERIALS, vol. 82, 5 March 2015 (2015-03-05), pages 20-30, XP029209765, ISSN: 0950-0618, DOI: 10.1016/J.CONBUILDMAT.2015.02.040**

(52) Cooperative Patent Classification (CPC): (Cont.)

C-Sets
**C04B 28/006, C04B 12/04, C04B 14/06, C04B 14/062, C04B 14/12, C04B 14/24, C04B 18/04, C04B 18/12, C04B 22/062, C04B 22/068, C04B 40/0263;**
**C04B 28/006, C04B 12/04, C04B 14/06, C04B 14/062, C04B 14/12, C04B 14/24, C04B 18/04, C04B 18/12, C04B 22/062, C04B 38/02, C04B 40/0263;**
**C04B 28/008, C04B 12/04, C04B 14/06, C04B 14/062, C04B 14/12, C04B 14/24, C04B 18/04, C04B 18/12, C04B 22/062, C04B 38/02, C04B 40/0263**

**Description**

The present invention refers to a process for producing a building material obtained from an alkaline activation of sawing sludge of stone materials.

In particular, the present invention refers to minerals present in sludge coming from cutting of silicate-rich stone materials.

Sawing sludge is the finest component of the parts of rock produced by cutting and working ornamental stones, with a granulometry ranging from a few um till a few mm of diameter. In general, over 50% of slime granules has a diameter lower than 0.025 mm. This material can initially be found in suspension in those waters of the working plant used for cooling the machinery; when freshly dehydrated, it is a sort of sludge mixture which tends to be cemented.

Further wastes, not covered by the present invention, include so-called secondary raw materials, MPS, composed of working scraps of raw materials or the recovery or recycling of wastes. MPS derive from stone scraps subjected to mining enriching processes, for the production of raw materials. In general, the mineral is subjected to magnetic separation, which allows its separation into several fractions, from the most precious ones to those identified as by-products, according to their contents of iron-rich minerals. Till some years ago, the market absorbed MPS for the production of ceramic products, for example porcelainized gres, and their by-products, used in the market of industrial sanding, of the premixtures for buildings, of the bituminous sheaths of concrete, used as inert fillers. Currently, the market absorption for such materials is extremely limited, with disadvantages above all from the point of view of environmental and visual impacts of residual extracting fronts, in particular on mountain sides affected by extraction quarries.

The extracting and working activities for stones are responsible for the generation of a high amount of scraps, both as slimes or sludge and with coarser granulometry. To evaluate the problem severity, it must be taken into account that in Europe every year 30 millions of tons of stone material are extracted, which is almost 40% of all world extractions. With respect to all extracted material, less than 50% is actually used for ornamental purposes. In fact, 25-50% of the material is discarded in a dump due to unevenness of the blocks, 20-30% of the material is lost when cutting originating the sludge, while 4-6% is removed when working the surface. Therefore, from 100 kg of stone, even only 25 kg of end products can be obtained, the remaining 75 kg being wastes. In particular, cutting and trimming operations, together with finishing ones, produce powders which are mixed with water used for cooling the diamond tools and for lowering the powders themselves. The reflows deriving therefrom are subjected to following decanting and filter-pressing processes, which allow recovering the aqueous fraction, then reused, and take the sludge to an extracting consistency of about 70 - 75 % of solid substance.

Managing and disposing these by-products creates impacts on the environment and supplementary costs for the companies. In fact, following the coming in force of the Federal Ordnance on Special Wastes (OTRs) and, for the Italian part, of Ronchi Decree (Law 22/1997) and of Ministry Decree 03/08/2005, sludge deriving from the working process of stone materials are classified as special wastes. New formal problems therefore occurred, related to their disposal, taking into account that the problem of sludge must be dealt with using authorizations, treatments or deposits in official dumps, thereby supporting a further disposal cost deriving from transport and dump taxes. According to recent estimations, including management of plants, transport from production site to dump, discharge in the dump, the disposal cost as an average is included between 0.02 and 0.05 €/kg. In Piedmont, the cost cannot be neglected, if the average production of sawing sludge is considered, for extraction sites such as, for example, Val d'Ossola, 70.000 t/year, the Pietra of Luserna site, 16.000 t/year.

MPS, through the mining enrichment process, are promoted from the waste stage to the products, co-products or by-products stage, depending on their chance of being re-used. Though there is a marked for such substances, as required by D. Lgs. 152/06, the current demand is however extremely low. Problems get worse when one considers the problem linked to temporary storage of scraps in quarry yards. In fact, this causes problems linked both to the rational exploitation of the bed, which results scarcely accessible for its rational use, in addition to safety problems for operators working in the quarry itself.

Geopolymer building materials are described in L. Zhang et al. "Synthesis and characterization of fly ash modified mine tailings-based geopolymers", Construction & Building Materials, 25(2011), 3773-3781. These materials are made from a mixture comprising copper mine-tailings, fly ash and an activation solution.

A further problem is given by a limited use of possible alternatives with respect to bricks and Portland cement, at least for some types of application.

In fact, Portland cement is the most widespread building material in the world. Its production requires high energy consumptions, necessary for calcination and grinding of the clinker which occurs at 1450 °C. Moreover, the production of concrete occurs through a continuous use of extraction raw materials. An energy consumption has been estimated equal to about 3.8 GJ for every ton of clinker. This high consumption corresponds to high emissions of polluting gases in the atmosphere. In fact, it has been computed that, in order to produce a ton of clinker, about 0.9 tons of $CO_2$ are produced, of which about 0.53 tons derive from the decomposing process of raw materials, and other 0.37 tons come from the use of fuels. This implies the fact that the whole concrete sector provides a contribution equal to 5-8%

of $CO_2$ emissions in the atmosphere caused by human activities.

Also the production of bricks occurs with a continuous use of extraction raw materials. Extracted clays are mixed and ground; afterwards, bricks are formed, dried and cooked in an oven at a temperature included between 800 and 1200°C. Studies report that the energy consumption necessary for producing a ton of bricks nowadays is equal to 1,9 - 2 GJ, wherein the cooking step affects for more than 80%. To a decrease of energy consumptions, which has been obtained in the last twenty years, a strong prevalence is associated for the use of natural gas with respect to fossil fuels, with consequent benefits on emissions to the atmosphere. Currently, in Italy, the production of a ton of bricks occurs as an average with an emission to the atmosphere of 116 Kg of $CO_2$. The amount of compound such as fluorine, sulfur and chlorine in an emission is proportional to their concentration in the ceramic mixture.

Object of the present invention is solving the above prior art problems, by providing an alternative to most common building materials, bricks and Portland cement, making a material free of extraction raw materials through cooking processes at low temperature.

A further object is using waste materials to obtain elements with a recycled content approaching 100%.

Another object is obtaining a material having good mechanical properties, performances and duration.

A further object is making a particularly versatile material to allow intervening on physical and mechanical characteristics of the finished product by modifying the molar ratios, introducing different types of aggregates.

A further object is being able to check amount and size of the pores.

Another object is being able to overlap, when pouring, sawing sludge, which are alkaline activated with different features, to be able to create blocks or multi-layer panels having different density and/or porosity.

A further object is obtaining, without the addition of additives to the mixture, materials, which are able to perfectly mimic possible shapes or designs present in the die, in order to make finished elements characterized by a particular design.

Another object is making dense or lightweight materials through a scarcely costly process, without the need of performing any heat sintering treatment.

The above and other objects and advantages of the invention, as will result from the following description, are reached with a process for producing a building material obtained from an alkaline activation of sawing sludge of stone materials, as claimed in the respective independent claims. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention, as appears from the enclosed claims.

The present invention will be better described by some preferred embodiments thereof, provided as a non-limiting example, with reference to the enclosed drawings, in which:

- Figure 1 shows a view of a dense sample of an embodiment of the building material obtained from an alkaline activation of sawing sludge of stone materials, according to the present invention;
- Figures 2 and 3 show views of porous samples of an embodiment of a building material obtained from an alkaline activation of sawing sludge of stone materials, according to the present invention; and
- Figure 4 shows a view of a dense/porous two-layer sample of an embodiment of a building material obtained from an alkaline activation of sawing sludge of stone materials, according to the present invention.

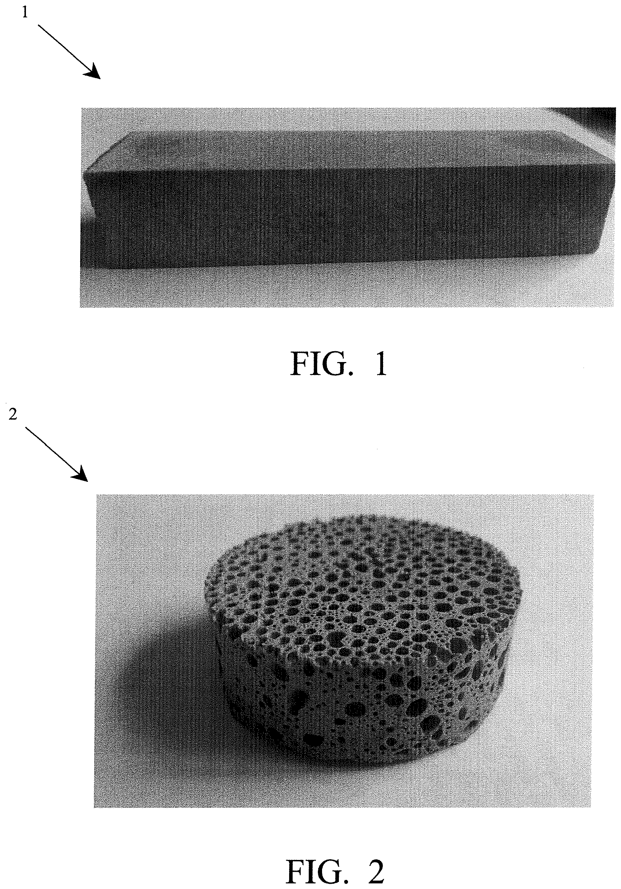

With reference to Figures 1 to 4, a building material 1, 2, 3 obtained from an alkaline activation of sawing sludge of stone materials comprises activating geo-polymerization solutions.

The activating solutions comprise: sodium silicate dissolved in deionized water; amorphous silica with nanometer sizes; sodium to allow making such building material 1, 2, 3 mainly composed of products and residues from extracting and working activities and lacking any other type of aggregate material.

In particular, the amorphous silica can be of the type coming from ashes produced by the combustion of organic material, such as ashes of rice husk. Therefore, also the solution of sodium hydroxide can compose a by-product of some chemical industrial washing processes and the deionized water coming from filtering processes to which sludge from cutting stone materials are subjected.

Aggregates, such as silica sands, foamed glass, foamed clay and polymeric resins, fibers, of a different nature and granulometry are added to make the building material 1, 2, 3, as standard mortar, with reduced weight or with improved properties.

The addition of polymeric resins allows making the building material 1 with a greater mechanical strength and a better workability.

The building materials 1 made, have a density included between 1.5 and 2.5 g/cm3, with a flexure strength on three points included between 10.0 and 20.0 MPa, a compression strength equal to or less than 40.0 MPa, with a thermal conductivity included between 1.0 and 1.3 W/mK, as shown, in particular, in Figure 1.

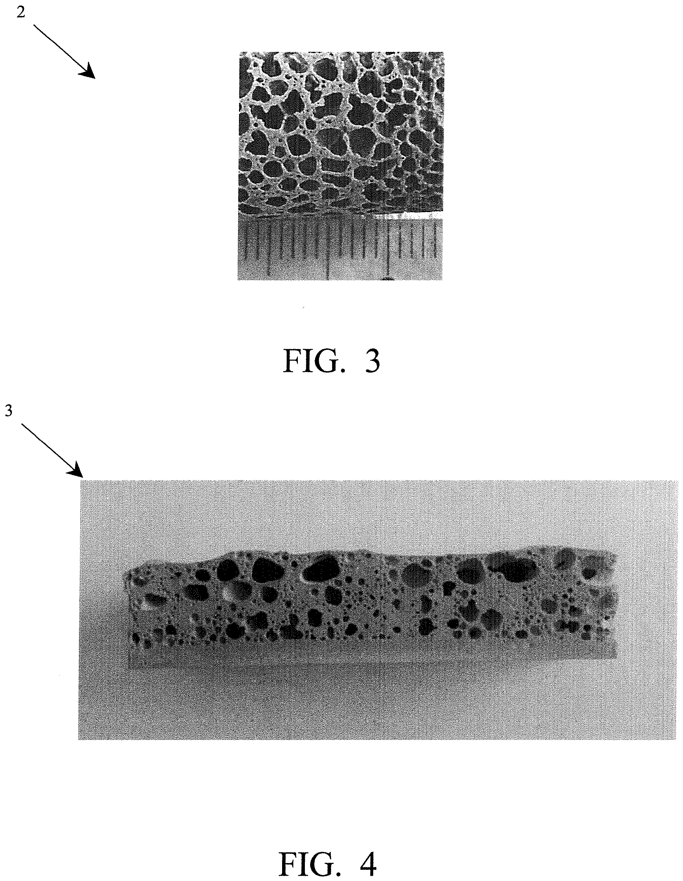

Adding a porogenous agent, such as hydrogen peroxide, with various volumes, in a variable amount, the building material 2 made has a different porosity, of a density included between 0.4 and 1.0 g/cm3, with thermal conductivity equal to or less than 0.3 W/mK, as shown, in particular, in Figures 2 and 3.

By pouring and overlapping layers of building material 1, 2, it is possible to make the building material 3 composed of layers with different density and porosity, as shown, in particular, in Figure 4.

In a first variation, according to the invention, the sawing sludge is a scrap product coming from sludge of stone materials of a feldspar nature with high contents of MgO and CaO cut with diamond blades. The activating alkaline solution comprises: a solution of sodium silicate containing NazO 10.6 wt%, SiOz 26.5 wt%, $H_2O$ 62.9wt%; sodium hydroxide in pellets with purity $\geq$ 98%; deionized water; nano-powder of amorphous silica with purity 99.5%. The activating alkaline solution has the following molar ratios: $SiO_2/Na_2O$ 1.64, $H_2O/Na_2O$ 13.0. The molar ratios of such building material 1 are: $Na_2O/SiO_2$= 0.13, $H_2O/Na_2O$= 13.0, $Na_2O/Al_2O_3$= 1.2, $SiO_2/Al_2O_3$= 9.58. The building material 1 produced is dense.

In a second variation, according to the invention, the sawing sludge is a scrap product coming from sludge of stone materials of a feldspar nature with high contents of MgO and CaO cut with diamond blades. The activating alkaline solution comprises a solution of sodium silicate containing: $Na_2O$ 10.6 wt%, $SiO_2$ 26.5 wt%, $H_2O$ 62.9wt%; sodium hydroxide in pellets with purity $\geq$ 98%; deionized water; nano-powder of amorphous silica with purity 99.5%. The activating alkaline solution has the following molar ratios: $SiO_2/Na_2O$ 1.64, $H_2O/Na_2O$ 13.0. The molar ratios of such building material 2 are: $Na_2O/SiO_2$= 0.13, $H_2O/Na_2O$= 13.0, $Na_2O/Al_2O_3$ = 1.2, $SiO_2/Al_2O_3$= 9.58. The building material 2 produced is porous.

A third variation (not according to the invention) deals with such building material 1 coming from a secondary raw material MPS of a feldspar nature. The activating alkaline solution comprises: potassium hydroxide in pellets; deionized water; nano-powder of amorphous silica with purity 99.5%. The activating alkaline solution has the following molar ratios: $SiO_2/K_2O$ 1.67, $H_2O/K_2O$ 11.0. The molar ratios of such building material 1 are: $K_2O/SiO_2$= 0.1, $H_2O/K_2O$= 11.0, $K_2O/Al_2O_3$ = 1.0, $SiO_2/Al_2O_3$= 10.1. Such building material 1 is dense.

A process for producing the building material 1 according to the present invention comprises the following steps:

- mechanically mixing a progressively increasing amount of the building material 1 composed of minerals contained in products and residues from extracting and working activities and from the activating alkaline solution;
- going on mechanically mixing a pre-set amount of the building material 1, for further five minutes;
- pouring the building material 1 into dies;
- hardening the building material 1 by heating it at a temperature included between 60°-90°C, for a period of time included between 24 and 48 hours.

A process for producing the building material 2 according to the present invention comprises the following steps:

- mechanically mixing, at a high speed, for a period of time included between 1 and 3 minutes, the building material 2 composed of minerals contained in products and residues from extracting and working activities and from the activating solution, after having added the porogenous agent, with various volumes, in a variable amount in depending on the porosity which has to be obtained;
- pouring the building material 2 into dies to obtain a porosity;
- hardening the building material 2 by heating it at a temperature included between 60° and 90°C, for a period of time included between 12 and 48 hours.

The building materials 1, 2, 3 of the present invention reach their stated objects.

Porous materials are obtained by using the same molar ratios of dense materials. Following a mechanical mixing, hydrogen peroxide is added to the mixture, with various volumes, as porogenous agent, in variable amounts depending on the porosity that has to be obtained. Following the addition, the mixture is mixed at high speed for 1-3 minutes and poured into the dies. Hardening occurs in a stove at 60°-90°C for 12-48 hours. Figure 2 shows a porous sample, deriving from a sawing sludge, obtained with a content of porogenous agent equal to 1%, while Figure 3 shows a detailed image of a porous material derived from MPS.

Due to the chance of changing the mix-design and to the good adhesion capability of the material, it is possible to pour multi-layer elements. Figure 4 shows a two-layer sample, with a base made of a dense material and an upper porous layer, characterized by a good adhesion between the two layers. The sawing sludge has been used here as raw material.

Table 1 contains a comparison of mechanical and thermal conductivity characteristics between dense material of the present invention, Portland cement and bricks and between porous material of the present invention and some lightweight material with insulating properties, which are normally used.

Table 1

| Material | Compressi on strength (MPa) | Flexure strength (MPa) | Thermal conductiv ity (W/mK) | Density (kg/m$^3$) | Fla mma bil ity |
|---|---|---|---|---|---|
| Material (1), dense | 20-40 MPa | 10-20 | 1.2 | 1500-2500 | |
| Granite | 100-250 | 11-13 | 2.3 | 2500-2900 | |
| Portland concrete | Between 32.5 and 52.5, depending on strength class (UNI EN 197/1). Values evaluated after 28 days of ageing, on mortar with sand/conc rete equal to 3. | 6-8 | 1.6 | 1400 | |
| Full brick | >18 | 3-5 | 0.7 | Fino 1600 | |
| Holed brick | >2.5 | 2-4 | 0.36 | 1200 | |
| Concrete screed (mortar) | 1 | 7 | 1.3-1.4 | 2000 | |
| Clinker in-view brick | 30-80 | 6, 6 | 0.8-1 | 1800-2000 | |
| Material (2, 3) | - 3.0 | - 6.5 | 0.2-0.3 | 400-1000 | |
| Autoclaved cellular materials | 1.2-3 | / | 0.09-0.35 | 300-800 | |
| Drywall | >8.5 | >7.5 | 0.21 | 900 | X |
| Fiber cement panels | / | / | 0.6 | 2000 | |
| Wood fibre panels | / | / | 0.1-0.6 | 600-1000 | X |
| Foamed polystyrene in slabs | about 8.5 | about 7.5 | 0.04 | 20-30 | X |

Working residues from the stone sector are mainly used in the proposed material, namely waste, sludge, or products obtained by mining enriching the waste themselves, MPS. Moreover, as previously specified, scraps coming from other industrial sectors can be used, to obtain a product which can be also composed of 100% recycled materials. Instead, for producing both Portland cement and bricks, raw materials are extracted. Raw materials used in the production cycle for concrete are for the major part extracted in quarries or mines. In particular, marl, pozzolan, gypsum and limestone are extracted. Extracting activities not only imply the use of non-renewable raw materials, but unavoidably cause a status change for the sites, generating impacts on environment, local economies and landscape. In 2011, 4.6% (about 2.1 millions of tons) of raw materials necessary for producing concrete in Italy has been replaced by alternative materials, composed of special wastes which are not dangerous, otherwise aimed to be disposed of in a dump (about 55%) and by materials deriving from other industrial processes (about 45%). The compliance with technical standards imposes a pre-set composition of clinker and of concrete, and only some types of wastes has the required chemical-physical characteristics. Raw materials composing the bricks are clays extracted in open-space quarries.

Being composed of alkaline activated feldspars, the proposed material is free from calcium hydroxide (Portlandite). The presence of Portlandite in the concrete ensures the presence of an alkaline environment (concrete pH included between 10 and 13) wherein frameworks are passivated. However, when time passes, calcium hydroxide reacts with carbon dioxide, generating $CaCO_3$ and $H_2O$. The carbonation phenomenon implies an increase of the material hardness, but also a lowering of pH of the cement matrix with consequent exposure to corrosion for the frameworks. The stone residual activated through an alkaline solution anyway reacts to a passivating environment for frameworks, but being without calcium hydroxide, is not subjected to the carbonation problem. Moreover, the absence of Portlandite makes the material more long-lasting with respect to degrading problems due to environmental exposure, in particular due to the presence of sulphates and chlorides.

The fire behavior of concrete is better for those classes of concrete, which free a lower amount of hydrolysis lime. This latter one can be transformed into calcium oxide at about 500°C during fires, favoring the crumbling of concrete during its extinguishing phase (or during the following wetting which must precede a possible restoration of the deteriorated structure) to reconvert oxide into calcium hydroxide, which occurs with an increase of volume. From this point of view, concrete packaged with blast furnace cement and above all pozzolanic cement behave better that those prepared with Portland cement due to the lower amount of hydrolysis lime. Being lacking hydrated phases, also the new material proposed here potentially has a better behavior to high temperature with respect to Portland cement.

The developed material has advantages due to its lower economic and environmental impact with respect to building materials which have comparable mechanical and physical properties. The nearest example is given by Portland cement which, like the material claimed here, gives rise to building components through steps of mixing the components, pouring into a die and following ageing, during which the finale conglomerate is obtained through setting and hardening steps.

However, the clinker made of Portland cement is produced through a step of cooking at very high temperature (about 1450°C) accompanied by high $CO_2$ emissions, as previously described. On the contrary, the stone residual (sludge, MPS or other by-products) is used as such, not needing any preliminary cooking step. Though there are no reference data related to embedded energy or to $CO_2$ emissions for this material, it is reasonable to assume a more sustainable process from the environmental point of view with respect to cement.

Since the material uses working/production scraps as raw material, also a low end product cost is foreseen. To reduce costs (and related environmental impacts) to a minimum, an activating solution will be prepared, also produced from by-products of other production cycles (for example, ashes of rice husk used as silica source), or low-cost chemical reagents, obtained from clean processes (for example, sodium hydroxide, produced from sodium chloride electrolysis, in hydroelectric plants).

Depending on mechanical or thermal conductivity features, resistance to high temperatures and to environmental degradation, the material is particularly adapted to develop prefabricated elements, which can be used in the building field, having structural and/or functional characteristics. The production of prefabricated elements, in fact, is particularly adequate, taking into account their ease of pouring, their design versatility and their curing speed at low temperatures. In particular:

- STRUCTURAL BLOCK: Mechanical strengths to flexure and compression of dense samples are comparable with those of cement materials.
- BLOCKS-PANELS FOR THERMAL INSULATION: Porous materials are characterized by discrete mechanical strengths and good thermal conductivity values, comparable with those of currently marketed insulated material of an organic nature.
- MULTI-LAYER BLOCKS-PANELS: Due to its good adhesion capability, the material can be poured into mutually integral layers having different density and/or porosity gradients.
- REFERENCE MARKET (Countries): The development of the material proposed in this application can be of interest for all European countries where the extracting sector is rich, together with the sector of working stone materials with the consequent production of scrap materials. In 2008 in Europe 24 millions of tons of finished stone products have been made. The biggest producers were Italy (44%), Spain (24%), France (7.1%), Great Britain (5%) and Germany (3.8%). These 5 Countries alone represent 84% of the total European production. Moreover, Europe is paying a lot of attention to problems of environmental sustainability, both in the field of stone materials and in the field of managing and disposing of wastes, as witnessed by numerous initiative and projects financed in this sector.

Some examples of building materials obtained with the process of the present invention are listed below.

Example 1

Processing of a dense material using a sawing sludge of feldspar nature with high contents of MgO and CaO, activated with alkaline solution based on sodium silicate.

Chemical composition of the starting aluminum-silicate powder: the type of used sludge comes from stone materials cut with diamond blades. Table 1.1 shows the amounts of the most abundant elements expressed as weight percentage of the corresponding oxide.

Table 1.1. Most abundant elements present in the selected sawing sludge.

| Major elements | % |
|---|---|
| $SiO_2$ | 42.73 |
| $TiO_2$ | 0.35 |
| $Al_2O_3$ | 10.02 |
| $Fe_2O_3$ | 2.75 |
| MnO | 0.05 |
| MgO | 8.60 |
| CaO | 13.25 |
| NazO | 2.15 |
| $K_2O$ | 2.28 |
| $P_2O_3$ | 0.12 |
| LOI | 17.5 |
| Total | 99.85 |

Composition and production of the activating alkaline solution based on sodium silicate: the activating alkaline solution has been produced starting from a commercial sodium silicate solution to which sodium hydroxide, deionized water and amorphous silica with nanometer sizes have been added.

- Sodium silicate solution (Sigma Aldrich) containing: Na2O 10.6 wt%, SiO2 26.5 wt%, H2O 62.9wt%
- Sodium hydroxide in pellets with purity $\geq$ 98% (Sigma Aldrich)
- Deionized water
- Nano-powder of amorphous silica (Sigma Aldrich) with purity 99.5%.

The activating alkaline solution is characterized by the following molar ratios:

SiO2/Na2O equal to 1.64;
H2O/Na2O equal to 13.0.

The pellets of sodium hydroxide and deionized water were added to the commercial sodium silicate solution and mechanically mixed with a magnetic stirrer. When hydroxide dissolved, amorphous silica was added a few at a time. The solution was kept under stirring for at least 24 hours, till silica was completely dissolved.

Mixing solution and sawing sludge: for creating the material, to the alkaline solution an amount of sawing sludge was added, so that the molar ratio Na2O/Al2O3 was equal to 1.2. The sludge was added a few at a time during the mechanical mixing and the mixture was kept under stirring for about 10 minutes. The obtained mixture is characterized by the following molar ratios:

```
Na2O/SiO2= 0.13

H2O/Na2O= 13

Na2O/Al2O3 = 1.2

SiO2/Al2O3= 9.58.
```

Pouring and curing: following the mixing, air bubbles were sucked with the help of a vacuum system. The mixture was then poured into the suitable dies and protected from the atmosphere. Curing occurred in a stove, by using the following temperature rise ramp to avoid sudden oscillations: from 40°C to 80°C with increase of 10 °C/30 minutes and isothermal line at 80°C for 24 hours. After this time, the samples were removed from the die and left in a stove at 80°C for other 48 hours ina protected atmosphere.

Physical-mechanical properties of the material: the tests were carried out on 28-day samples, kept at ambient temperature in a protected atmosphere following the above described curing treatment. If necessary, the samples were subjected to a surface polishing treatment carried out with dry abrasive papers, in order to homogenize their surface. The samples were characterized by a geometric density of 2.04 $\pm$ 0.02 g/cm3. Measures were performed in agreement with EN 12390-7 Standard. The flexure strength on three points was measured on samples with sizes of 20 X 20 X 75 mm3 with the MTS Insight (MTS Systems Corporation, USA) instrument, with maximum load capacity of 1 kN and standard length). Values equal to 12 MPa $\pm$ 1.5 Mpa were obtained. The compression strength tests were carried out on both residual crops from flexure texts, in agreement with EN 196-1 Standard, using a closed-loop, 250-kN universal press (MTS Systems Corporation, USA) by checking the displacement. A compression strength equal to 28.6 MPa $\pm$ 2.6 Mpa was demonstrated. The thermal conductivity was measured at ambient temperature with the help of the Hot Disk TPS 2500 instrument, in agreement with the ISO 22007-2 Method. Values equal to 1.3$\pm$0.1 W/mK were detected.

## Example 2

Processing of a porous material through the addition of hydrogen peroxide, using a sawing sludge of feldspar nature with high contents of MgO and CaO, activated with an alkaline solution based on sodium silicate.

Chemical composition of the starting aluminum-silica powder: the type of used sludge comes from stone materials cut with diamond blades. Table 2.1 shows the amounts of the most abundant elements expressed in weight percentages of the corresponding oxide.

Tabella 2.1. Most abundant elements present in the selected sawing sludge.

| Major elements | % |
|---|---|
| $SiO_2$ | 42.73 |
| $TiO_2$ | 0.35 |
| $Al_2O_3$ | 10.02 |
| $Fe_2O_3$ | 2.75 |
| MnO | 0.05 |
| MgO | 8.60 |
| CaO | 13.25 |
| $Na_2O$ | 2.15 |
| $K_2O$ | 2.28 |
| $P_2O_3$ | 0.12 |
| LOI | 17.5 |
| Total | 99.85 |

Composition and production of the activating alkaline solution based on sodium silicate: the activating alkaline solution was produced starting from a commercial sodium silicate solution to which sodium hydroxide, deionized water and amorphous silica with nanometer sizes were added:

- sodium silicate solution (Sigma Aldrich) containing: Na2O 10.6 wt%, SiO2 26.5 wt%, H2O 62.9 wt%;
- sodium hydroxide in pellets with purity $\geq$ 98% (Sigma Aldrich);
- deionized water;
- nano-powder of amorphous silica (Sigma Aldrich) with purity 99.5%.

The activating alkaline solution is characterized by the following molar ratios:

SiO2/Na2O equal to 1.64;
H2O/Na2O equal to 13.

The pellets of sodium hydroxide and deionized water were added to the commercial solution of sodium silicate and mechanically mixed with a magnetic stirred. After having dissolved the hydroxide, the amorphous silica was added a few at a time. The solution was kept under stirring for at least 24 hours, till silica was completely dissolved.

Mixing of solution and sawing sludge: for creating the material, to the alkaline solution an amount of sawing sludge was added, so that the molar ratio Na2O/Al2O3 was equal to 1.2. The sludge was added a few at a time during the mechanical mixing and the mixture was kept under stirring for about 10 minutes. After this time, hydrogen peroxide was added (110 vol., supplied by Sigma Aldrich) in an amount equal to 1% in weight on the total. The mixture was kept for other 2 minutes under stirring at high speed.

The obtained mixture is characterized by the following molar ratios:

$$Na2O/SiO2 = 0.13$$

$$H2O/Na2O = 13$$

$$Na2O/Al2O3 = 1.2$$

$$SiO2/Al2O3 = 9.58$$

Pouring and curing: the mixture was immediately poured into suitable dies and protected from the atmosphere. Curing was carried out in a stove using the following temperature rise ramp to avoid sudden oscillations: from 40°C to 80°C with an increase of 10 °C/ 30 minutes and isothermal line at 80°C for 24 hours. After this time, the samples were removed from the die and left in the stove at 80°C for other 48 hours in a protected atmosphere.

Physical-mechanical characteristics of the material: the tests were carried out on 28-day samples, kept at ambient temperature in a protected atmosphere following the above described curing treatment. If necessary, the samples were subjected to a surface polishing treatment carried out with dry abrasive papers, in order to homogenize their surfaces. The samples are characterized by a geometric density of 0.8 g/cm3. A content of porosity equal to 60.8 % was computed. Measures were carried out in agreement with the EN 12390-7 Standard. The thermal conductivity was measured at ambient temperature with the help of the Hot Disk TPS 2500 instrument, in agreement with the ISO 22007-2 Method. Values of thermal conductivity equal to 0.33 ± 0.03 W/mK were detected. The flexure strength on three points was measured on samples with sizes of 20 X 20 X 75 mm3 with the MTS Insight (MTS Systems Corporation, USA) instrument, with maximum load capacity of 1 kN and standard length). Values equal to 3.1 MPa ± 0.1 Mpa were obtained. The compression strength tests were carried out on both residual crops of the flexure tests, in agreement with the EN 196-1 Standard, using a closed-loop, 250-kN universal press (MTS Systems Corporation, USA) checking the displacement. A compression strength equal to 6.5 MPa ± 0.8 Mpa was demonstrated.

Example 3 (not according to the invention)

Processing of a dense material using a Secondary Raw Material (MPS) of feldspar nature activated with an alkaline solution based on potassium silicate.

Chemical composition of the starting aluminum-silica powder: Table 3.1 shows the elements present in the highest amount and expressed in weight percentage of the corresponding oxide.

Table 3.1.

| Major elements | % |
|---|---|
| SiO2 | 71.9 |
| TiO2 | 0.25 |
| Al2O3 | 14.5 |
| Fe2O3 | 2.50 |
| MgO | 0.30 |
| CaO | 1.40 |

(continued)

| Major elements | % |
|---|---|
| Na2O | 3.50 |
| K2O | 4.50 |
| LOI | 1 |
| Total | 99.85 |

Composition and production of the activating alkaline solution based on potassium silicate: the activating alkaline solution was produced starting from the following reagents:

- potassium hydroxide in pellets (Sigma Aldrich);
- deionized water;
- nano-powder of amorphous silica (Sigma Aldrich) with purity 99.5%.

The activating alkaline solution is characterized by the following molar ratios:

$SiO_2/K_2O$ equal to 1.67;
$H_2O/K_2O$ equal to 11.

To obtain this solution, potassium hydroxide was dissolved in deionized water through magnetic stirring at ambient temperature. After having obtained the solution, silica with nanometer sizes was added a few at a time. The solution was kept under stirring for at least 24 hours at ambient temperature, till the complete silica dissolution.

Mixing of solution and sawing sludge: for creating the material, to the alkaline solution an amount of sawing sludge was added so that the molar ratio $K_2O/Al_2O_3$ was equal to 1. The feldspar powder was added a few at a time during the mechanical mixing and the mixture was kept under stirring for about 10 minutes.

The obtained mixture is characterized by the following molar ratios:

$$K_2O/SiO_2 = 0.1$$

$$H_2O/K_2O = 11$$

$$K_2O/Al_2O_3 = 1$$

$$SiO_2/Al_2O_3 = 10.1$$

Pouring and curing: following mixing, air bubbles were sucked with the help of a vacuum system. The mixture was then poured into suitable dies and protected from the atmosphere. Curing was carried out in a stove by using the following temperature rise ramp to avoid sudden oscillations: from 40°C to 80°C with an increase of 10 °C/30 minutes and an isothermal line at 80°C for 24 hours. After this time, the samples were removed from the die and left in the stove at 80°C for other 48 hours in a protected atmosphere.

Physical-mechanical characteristics of the material: the tests were carried out on 28-day samples, kept at ambient temperature in a protected atmosphere following the above described curing treatment. If necessary, the samples were subjected to a surface polishing treatment carried out with dry abrasive papers, in order to homogenize their surfaces. The samples are characterized by a geometric density of 1,8 ± 0,1 g/cm3. The measures were carried out in agreement with the EN 12390-7 Standard. The flexure strength on three points was measured on samples with sizes of 20 X 20 X 75 mm3 with the MTS Insight (MTS Systems Corporation, USA) instrument, with a maximum load capacity of 1 kN and standard length). Values equal to 12 MPa ± 1.5 Mpa were obtained.

The thermal conductivity was measured at ambient temperature with the help of the Hot Disk TPS 2500 instrument, in agreement with the ISO 22007-2 Method. Values of thermal conductivity equal to 1.20 ± 0.05 W/mK were observed.

**Claims**

1. Process for producing a building material (1) obtained from an alkaline activation of sawing sludge as scrap product coming from cutting stone materials, comprising activating alkaline solutions comprising sodium silicate dissolved in deionized water, amorphous silica with nanometer sizes and sodium or potassium hydroxide, said building material (1) having a density ranging between 1.5 and 2.5 g/cm3, a three points flexural strength ranging between 10.0 and 20.0 MPa, a compression strength equal to or lower than 40.0 MPa, a thermal conductivity ranging between 1.0 and 1.3 W/mK, said building material (1) coming from sludge of stone materials of a feldspar nature with high contents of MgO and CaO cut with diamond blades, the activating alkaline solution comprising a solution of sodium silicate containing $Na_2O$ 10.6 wt%, $SiO_2$ 26.5 wt%, $H_2O$ 62.9 wt%, sodium hydroxide in pellets with purity $\geq$ 98%, deionized water, nano-powder of amorphous silica with purity 99.5%, the activating alkaline solution having the following molar ratios $SiO_2/Na_2O$ 1.64, $H_2O/Na_2O$ 13.0, the molar ratios of said building material (1) being $Na_2O/SiO_2$=0.13, $H_2O/Na_2O$=13.0, $Na_2O/Al_2O_3$=1.2, $SiO_2/Al_2O_3$=9.58, said building material (1) being dense, the process comprising the following steps:

   - mechanically mixing a progressively increasing amount of said building material (1) ;
   - going on mechanically mixing a pre-set amount of said building material (1) for further five minutes;
   - pouring said building material (1) into dies;
   - hardening said building material (1) by heating it at a temperature included between 60° and 90°C, for a period of time included between 24 and 48 hours.

2. Process for producing a building material (2) obtained from an alkaline activation of sawing sludge as scrap product coming from cutting stone materials, comprising activating alkaline solutions comprising sodium silicate dissolved in deionized water, amorphous silica with nanometer sizes and sodium or potassium hydroxide, said building material (2) comprising a porogenous agent, such as hydrogen peroxide, with various volumes, in a variable amount to allow making said building material (2) with different porosities, with a density ranging between 0.4 and 1.0 g/cm3, with thermal conductivity equal to or lower than 0.3 W/mK, said building material (2) comes from sludge of stone materials of a feldspar nature with high contents of MgO and CaO cut with diamond blades, the activating alkaline solution comprising a solution of sodium silicate containing $Na_2O$ 10.6 wt%, $SiO_2$ 26.5 wt%, $H_2O$ 62.9 wt%, sodium hydroxide in pellets with purity $\geq$ 98%, deionized water, nano-powder of amorphous silica with purity 99.5%, the activating alkaline solution having the following molar ratios $SiO_2/Na_2O$ 1.64, $H_2O/Na_2O$ 13.0, the molar ratios of said building material (2) being $Na_2O/SiO_2$=0.13, $H_2O/Na_2O$=13.0, $Na_2O/Al_2O_3$=1.2, $SiO_2/Al_2O_3$=9.58, said building material (2) being porous, the process comprising the following steps:

   - mechanically mixing, at a high speed, for a period of time included between 1 and 3 minutes, said building material (2), after having added the porogenous agent, with various volumes, in a variable amount depending on the porosity that has to be obtained;
   - pouring said building material (2) into dies to obtain a porosity;
   - hardening said building material (2) by heating it at a temperature included between 60° and 90°C, for a period of time included between 12 and 48 hours.

3. Process according to claim 1, **characterized in that** the amorphous silica comes from ashes produced by a combustion of organic material, like ashes of rice husk, the solution of sodium hydroxide is a by-product of some chemical industrial washing processed and deionized water comes from filtering processed to which sludges from cutting stone materials are subjected.

4. Process according to claim 1, **characterized in that** the building material (1, 2) further comprises different types of aggregates having different granulometry, such as silica sands, foamed glass, foamed clay and polymeric resins, to improve the physical properties of said building material (1, 2, 3).

**Patentansprüche**

1. Herstellungsverfahren eines Baumaterials (1), das durch alkalische Aktivierung von Sägeschlamm als Abfallprodukt beim Schneiden von Steinmaterial gewonnen wird, umfassend aktivierende alkalische Lösungen, die in entionisiertem Wasser gelöstes Natriumsilikat, nanoskaliges amorphes Siliciumdioxid und Natrium- oder Kaliumhydroxid umfassen, wobei das Baumaterial (1) eine Dichte zwischen 1,5 und 2,5 g/cm3, eine Dreipunkt-Biegefestigkeit zwischen 10,0 und 20,0 MPa, einen Druckwiderstand von 40,0 MPa oder weniger und eine Wärmeleitfähigkeit zwischen 1,0 und 1,3 W/ aufweist. mK, wobei das Baumaterial (1) aus Schlamm von Steinmaterialien feldspatischer Natur mit einem hohen Gehalt an MgO und CaO stammt, die mit Diamantklingen geschnitten wurden, wobei die aktivierende alkalische Lösung Natriumsilikatlösung enthält, die 10,6 Gew.-% Na2O und 26,5 Gew.-% SiO2 enthält Gewicht, H2O 62,9 Gew.-%, Natriumhydroxidpellets mit einer Reinheit ≥ 98 %, entionisiertes Wasser, amorphes Siliciumdioxid-Nanopulver mit einer Reinheit 99,5 %, die aktivierende alkalische Lösung mit den folgenden Molverhältnissen SiO2/Na2O 1,64, H2O/Na2O 13,0, die Molverhältnisse des Baumaterials (1) sind Na2O/SiO2=0,13, H2O/Na2O=13,0, Na2O/Al2O3=1,2, SiO2/Al2O3=9,58, wobei das Baumaterial (1) dicht ist, wobei das Verfahren die folgenden Schritte umfasst:

- mechanisches Mischen einer zunehmend zunehmenden Menge des Baumaterials (1),
- weitere fünf Minuten lang eine festgelegte Menge des Baumaterials (1) mechanisch weiter vermischen;
- Gießen des Baumaterials (1) in Formen;
- Aushärten des Baumaterials (1) durch Erhitzen auf eine Temperatur zwischen 60° und 90°C für einen Zeitraum zwischen 24 und 48 Stunden.

2. Herstellungsverfahren eines Baumaterials (2), das durch alkalische Aktivierung von Sägeschlamm als Abfallprodukt beim Schneiden von Steinmaterial gewonnen wird, umfassend aktivierende alkalische Lösungen, die in entionisiertem Wasser gelöstes Natriumsilikat, nanoskaliges amorphes Siliciumdioxid und Natrium- oder Kaliumhydroxid umfassen, wobei das Baumaterial (2) ein poröses Mittel wie Wasserstoffperoxid mit unterschiedlichen Volumina und einer variablen Menge umfasst, um die Herstellung des Baumaterials (2) mit unterschiedlichen Porositäten und einer Dichte zwischen 0,4 und 1,0 g/cm3 zu ermöglichen Wärmeleitfähigkeit gleich oder kleiner als 0,3 W/mK, wobei das Baumaterial (2) aus Schlamm aus Steinmaterialien feldspatischer Natur mit einem hohen Gehalt an MgO und CaO stammt, der mit Diamantklingen geschnitten wurde, wobei die alkalische Aktivatorlösung Natriumsilikatlösung enthält Na2O 10,6 Gew.-%, SiO2 26,5 Gew.-%, H2O 62,9 Gew.-%, Natriumhydroxidpellets mit einer Reinheit ≥ 98 %, entionisiertes Wasser, amorphes Silica-Nanopulver mit einer Reinheit 99,5 %, die aktivierende alkalische Lösung weist die folgenden Molverhältnisse SiO2 auf /Na2O 1,64, H2O/Na2O 13,0, wobei die Molverhältnisse des Baumaterials (1) Na2O/SiO2 = 0,13, H2O/Na2O = 13,0, Na2O/Al2O3 = 1,2, SiO2/Al2O3 = 9,58 sind, wobei das Baumaterial (2) porös ist, wobei das Verfahren die folgenden Schritte umfasst:

- das Baumaterial (2) mechanisch mit hoher Geschwindigkeit für einen Zeitraum zwischen 1 und 3 Minuten zu mischen, nachdem das Porosierungsmittel mit unterschiedlichen Volumina und in unterschiedlichen Mengen im Verhältnis zur zu erreichenden Porosität hinzugefügt wurde,
- Gießen des Baumaterials (2) in Formen, um eine Porosität zu erhalten;
- Aushärten des Baumaterials (2) durch Erhitzen auf eine Temperatur zwischen 60° und 90°C für einen Zeitraum zwischen 12 und 48 Stunden.

3. Verfahren nach Anspruch 1, 2, **dadurch gekennzeichnet, dass** das amorphe Siliciumdioxid aus Aschen stammt, die durch die Verbrennung von organischem Material, wie beispielsweise Reisschalenasche, entstehen, die Natriumhydroxidlösung ein Nebenprodukt einiger chemischer Prozesse des industriellen Waschens ist und die entionisiertes Wasser stammt aus Filterprozessen, denen der Schneidschlamm von Steinmaterialien unterzogen wird.

4. Verfahren nach Anspruch 1, 2, **dadurch gekennzeichnet, dass** der Baustoff (1, 2) zur Verbesserung der physikalischen Eigenschaften weiterhin verschiedene Arten von Zuschlagstoffen mit unterschiedlicher Körnung, wie Quarzsande, Blähglas, Blähton und Polymerharze, enthält des Baumaterials (1, 2, 3).

**Revendications**

1. Procédé de production d'un matériau de construction (1) obtenu par activation alcaline de boue de sciage en tant que déchet provenant de la coupe de matériaux en pierre, comprenant l'activation de solutions alcalines comprenant du silicate de sodium dissous dans de l'eau déminéralisée, de la silice amorphe de taille nanométrique et de l'hydroxyde de sodium ou de potassium, ledit matériau de construction (1) ayant une masse volumique comprise entre 1,5 et 2,5 g/cm3, une résistance à la flexion trois points comprise entre 10,0 et 20,0 MPa, une résistance à la compression égale ou inférieure à 40,0 MPa, une conductivité thermique comprise entre 1,0 et 1,3 W/ mK, ledit matériau de construction (1) provenant de boue de matériaux pierreux de nature feldspathique à haute teneur en MgO et CaO taillés au disque diamant, la solution alcaline activante comprenant une solution de silicate de sodium contenant Na2O 10,6 % en poids, SiO2 26,5 % en poids, H2O 62,9 % en poids, hydroxyde de sodium en pastilles de pureté ≥ 98 %, eau déminéralisée, nanopoudre de silice amorphe de pureté 99,5 %, la solution alcaline activante ayant les rapports molaires suivants $SiO_2/Na_2O$ 1,64, $H_2O/Na_2O$ 13,0, le les rapports molaires dudit matériau de construction (1) étant $Na_2O/SiO_2=0,13$, $H_2O/Na_2O=13,0$, $Na_2O/Al_2O_3=1,2$, $SiO_2/Al_2O_3=9,58$, ledit matériau de construction (1) étant dense, le procédé comprenant les étapes suivantes:

- mélanger mécaniquement une quantité progressivement croissante dudit matériau de construction (1),
- continuer à mélanger mécaniquement une quantité déterminée dudit matériau de construction (1) pendant encore cinq minutes,
- couler ledit matériau de construction (1) dans des moules;
- durcir ledit matériau de construction (1) en le chauffant à une température comprise entre 60° et 90°C, pendant une durée comprise entre 24 et 48 heures.

2. Procédé de production d'un matériau de construction (2) obtenu par activation alcaline de boue de sciage en tant que déchet provenant de la coupe de matériaux en pierre, comprenant l'activation de solutions alcalines comprenant du silicate de sodium dissous dans de l'eau déminéralisée, de la silice amorphe de taille nanométrique et de l'hydroxyde de sodium ou de potassium, ledit matériau de construction (2) comprenant un agent poreux, tel que le peroxyde d'hydrogène, avec différents volumes, en quantité variable pour permettre de produire ledit matériau de construction (2) avec différentes porosités, avec une densité comprise entre 0,4 et 1,0 g/cm3 avec une conductivité thermique égale ou inférieure à 0,3 W/mK, ledit matériau de construction (2) provenant de boue de matériaux pierreux de nature feldspathique à forte teneur en MgO et CaO taillés au disque diamant, la solution d'activateur alcalin comprenant une solution de silicate de sodium contenant $Na_2O$ 10,6 % en poids, $SiO_2$ 26,5 % en poids, $H_2O$ 62,9 % en poids, pastilles d'hydroxyde de sodium de pureté $\geq$ 98 %, eau déionisée, nanopoudre de silice amorphe de pureté 99,5 %, la solution alcaline d'activation ayant les rapports molaires $SiO_2$ suivants $/Na_2O$ 1,64, $H_2O/Na_2O$ 13,0, les rapports molaires dudit matériau de construction (1) étant $Na_2O/SiO_2 =0,13$, $H_2O/Na_2O=13,0$, $Na_2O/Al_2O_3=1,2$, $SiO_2/Al_2O_3=9,58$, ledit matériau de construction (2) étant poreux, le procédé comprenant les étapes suivantes:

- malaxer mécaniquement, à grande vitesse, pendant une durée comprise entre 1 et 3 minutes, ledit matériau de construction (2), après addition de l'agent poreux, à différents volumes, en quantités variables en fonction de la porosité à obtenir;
- couler ledit matériau de construction (2) dans des moules pour obtenir une porosité;
- durcir ledit matériau de construction (2) en le chauffant à une température comprise entre 60° et 90°C, pendant une durée comprise entre 12 et 48 heures.

3. Procédé selon la revendication 1, 2, **caractérisé en ce que** la silice amorphe provient de cendres produites par combustion de matières organiques, telles que des cendres de balle de riz, la solution de soude est un sous-produit de certains procédés chimiques de lavage industriel et la l'eau déminéralisée provient des processus de filtrage auxquels est soumise la boue de coupe des matériaux en pierre.

4. Procédé selon la revendication 1, 2, **caractérisé en ce que** le matériau de construction (1, 2) comprend en outre différents types d'agrégats ayant une granulométrie différente, tels que des sables siliceux, du verre expansé, de l'argile expansée et des résines polymères, pour améliorer les propriétés physiques dudit matériau de construction (1, 2, 3).

FIG. 1

FIG. 2

2

FIG. 3

3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. ZHANG et al.** *Construction & Building Materials,* 2011, vol. 25, 3773-3781